(19) Europäisches Patentamt
European Patent Office
Office européen des brevets

(11) EP 4 745 083 A1

(12) **EUROPEAN PATENT APPLICATION**
published in accordance with Art. 153(4) EPC

(43) Date of publication:
**20.05.2026 Bulletin 2026/21**

(21) Application number: **24839704.4**

(22) Date of filing: **08.07.2024**

(51) International Patent Classification (IPC):
***C01B 21/072** (2006.01)* ***C08L 101/00** (2006.01)*

(52) Cooperative Patent Classification (CPC):
**C01B 21/072; C08L 101/00**

(86) International application number:
**PCT/JP2024/024543**

(87) International publication number:
**WO 2025/013812 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.07.2023 JP 2023114424**

(71) Applicant: **Resonac Corporation**
**Tokyo 105-7325 (JP)**

(72) Inventors:
- **SUGIMOTO Hiroki**
  **Tokyo 105-7325 (JP)**
- **YOSHIDA Ikue**
  **Tokyo 105-7325 (JP)**
- **MINORIKAWA Naoki**
  **Tokyo 105-7325 (JP)**

(74) Representative: **Strehl & Partner mbB**
**Maximilianstrasse 54**
**80538 München (DE)**

(54) **METHOD FOR PRODUCING SILICON-CONTAINING OXIDE-COATED ALUMINUM NITRIDE PARTICLES, AND SILICON-CONTAINING OXIDE-COATED ALUMINUM NITRIDE PARTICLES**

(57) A method for producing a silicon-containing oxide-coated aluminum nitride particle including an aluminum nitride particle and a silicon-containing oxide film that covers a surface of the aluminum nitride particle, the method having a first step of crushing an aggregated particle that is included in a raw material aluminum nitride particle to obtain a crushed aluminum nitride particle, a second step of covering a surface of the crushed aluminum nitride particle with an organic silicone compound including a specific structure to obtain an organic silicone compound-coated aluminum nitride particle, and a third step of heating the organic silicone compound-coated aluminum nitride particle at a heating temperature of 300°C or higher and lower than 1000°C, in which a decrease rate of an untamped density of the crushed aluminum nitride particle with respect to an untamped density of the raw material aluminum nitride particle is 10% or more.



Processed by Luminess, 75001 PARIS (FR)

## Description

Technical Field

The present invention relates to a method for producing a silicon-containing oxide-coated aluminum nitride particle and a silicon-containing oxide-coated aluminum nitride particle.

Background Art

Aluminum nitride is highly thermally conductive and has excellent electrical insulating properties. Therefore, aluminum nitride is promising as a filler for resin compositions that are used for products such as heat dissipation sheets and sealing materials for electronic components. However, aluminum nitride is hydrolyzed by a reaction with moisture and modified into poorly thermally conductive aluminum hydroxide. Along with that, aluminum nitride also generates corrosive ammonia upon hydrolysis.

The hydrolysis of aluminum nitride also proceeds due to moisture in the atmosphere. Therefore, under high temperature and high moisture conditions, products to which aluminum nitride has been added do not only degrade moisture resistance and thermal conductivity but also cause corrosion attributed to ammonia generated by the hydrolysis of aluminum nitride, which is a concern of performance degradation.

As a technique for improving the moisture resistance of aluminum nitride, for example, there has been a proposal of a method for producing a silicon-containing oxide-coated aluminum nitride particle including an aluminum nitride particle and a silicon-containing oxide film that covers the surface of the aluminum nitride particle, the method including a first step of covering the surface of the aluminum nitride particle with a silicone compound having a specific structure and a second step of heating the aluminum nitride particle covered with the organic silicon compound at a specific temperature (for example, refer to Patent Literature 1 and 2).

Citation List

Patent Literature

PTL1: WO 2020/040309
PTL2: JP 2021-075435 A

Summary of Invention

Technical Problem

In the production method described in Patent Literature 1 and 2, silicon-containing oxide-coated aluminum nitride particles to be obtained aggregate in some cases, and there is a problem in that the aggregation of the silicon-containing oxide-coated aluminum nitride particles degrades the properties of filling a variety of materials. In addition, when the aggregated silicon-containing oxide-coated aluminum nitride particles are crushed to prepare a composition, the silicon-containing oxide films covering the surfaces of the aluminum nitride particles peel off, which creates a problem of the degradation of the moisture resistance of the composition.

The present invention has been made in consideration of such circumstances, and an objective of the present invention is to provide a method for producing a silicon-containing oxide-coated aluminum nitride particle enabling the production of silicon-containing oxide-coated aluminum nitride particles that maintain the high thermal conductivity of aluminum nitride particles, have excellent moisture resistance and are less likely to aggregate, as well as the silicon-containing oxide-coated aluminum nitride particle.

Solution to Problem

As a result of intensive studies, the present inventors found that the above-described problems can be solved by crushing aggregated particles that are included in raw material aluminum nitride particles to obtain crushed aluminum nitride particles and coating the crushed aluminum nitride particles using a specific organic silicone compound and completed the present invention. That is, the present invention has the following configurations.

[1] A method for producing a silicon-containing oxide-coated aluminum nitride particle comprising an aluminum nitride particle and a silicon-containing oxide film that covers a surface of the aluminum nitride particle, the method comprising:

a first step of crushing an aggregated particle that is included in a raw material aluminum nitride particle to obtain a crushed aluminum nitride particle;
a second step of covering a surface of the crushed aluminum nitride particle with an organic silicone compound comprising a structure represented by the following formula (1) to obtain an organic silicone compound-coated aluminum nitride particle; and
a third step of heating the organic silicone compound-coated aluminum nitride particle at a heating temperature of 300°C or higher and lower than 1000°C,
wherein a decrease rate of an untamped density of the crushed aluminum nitride particle with respect to an untamped density of the raw material aluminum nitride particle is 10% or more,

[Chem. 1]

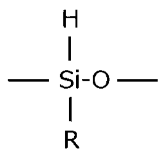

· · · (1)

wherein, in the formula (1), R is an alkyl group having 1 to 4 carbon atoms.

[2] The method for producing a silicon-containing oxide-coated aluminum nitride particle according to [1], wherein the heating temperature in the third step is 300°C or higher and 880°C or lower.
[3] The method for producing a silicon-containing oxide-coated aluminum nitride particle according to [1] or [2], wherein the silicon-containing oxide film is a silica film.
[4] The method for producing a silicon-containing oxide-coated aluminum nitride particle according to any one of [1] to [3], wherein the second step is performed by a gas-phase adsorption method.
[5] The method for producing a silicon-containing oxide-coated aluminum nitride particle according to [4], wherein the second step is performed under a temperature condition of 30°C to 200°C.
[6] The method for producing a silicon-containing oxide-coated aluminum nitride particle according to any one of [1] to [5], wherein the organic silicone compound including the structure represented by the formula (1) includes at least one of a compound represented by the following formula (2) and a compound represented by the following formula (3).

[Chem. 2]

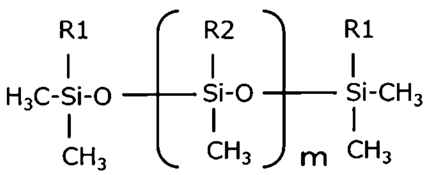

· · · (2)

Wherein, in the formula (2), R1 and R2 are each independently a hydrogen atom or a methyl group, at least one of R1 and R2 is a hydrogen atom, and m is an integer of 0 to 10.

[Chem. 3]

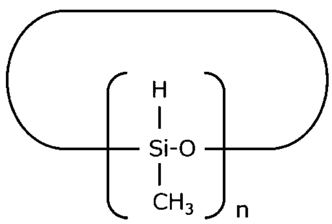

· · · (3)

Wherein, in the formula (3), n is an integer of 3 to 6.

[7] The method for producing a silicon-containing oxide-coated aluminum nitride particle according to any one of [1] to [6], wherein a particle size distribution width change rate of a particle size distribution width ($P_2$) of the silicon-containing oxide-coated aluminum nitride particle with respect to a particle size distribution width ($P_1$) of the raw material aluminum nitride particle that is calculated by the following formula (I) is 0% or less,

$$\text{particle size distribution width change rate (\%)} = [(P_2/P_1) - 1] \times 100 \qquad \text{(I)}$$

particle size distribution width ($P_1$) of raw material aluminum nitride particle = ($D_1$90 - $D_1$10)/$D_1$50 (I-1) (I-1)

particle size distribution width ($P_2$) of silicon-containing oxide-coated aluminum nitride particle = ($D_2$90 - $D_2$10)/$D_2$50 (I-2) (I-2)

wherein $D_1$90 is a cumulative volume 90% particle diameter of the raw material aluminum nitride particle, $D_1$50 is a cumulative volume 50% particle diameter of the raw material aluminum nitride particle, $D_1$10 is a cumulative volume 10% particle diameter of the raw material aluminum nitride particle, $D_2$90 is a cumulative volume 90% particle diameter of the silicon-containing oxide-coated aluminum nitride particle, $D_2$50 is a cumulative volume 50% particle diameter of the silicon-containing oxide-coated aluminum nitride particle, and $D_2$10 is a cumulative volume 10% particle diameter of the silicon-containing oxide-coated aluminum nitride particle.

[8] A silicon-containing oxide-coated aluminum nitride particle comprising: an aluminum nitride particle; and a silicon-containing oxide film that covers a surface of the aluminum nitride particle,

wherein an untamped density is less than 0.58, and
an ammonia concentration measured under the following measurement conditions is less than 10 mg/L;
measurement conditions: a mixed solution obtained by adding and mixing 3 g of the silica-coated aluminum nitride particle to 17 g of a hydrochloric acid aqueous solution having a pH of 4 is heated at 134°C for two hours and then left to stand at room temperature (25°C) for one hour to fabricate a measurement sample, and the ammonia concentration in the measurement sample at 25°C is measured using an ammonia electrode.

[9] A resin composition comprising: the silicon-containing oxide-coated aluminum nitride particle according to [8].

## Advantageous Effect of Invention

According to the present invention, it is possible to provide a method for producing a silicon-containing oxide-coated aluminum nitride particle enabling the production of silicon-containing oxide-coated aluminum nitride particles that maintain the high thermal conductivity of aluminum nitride particles, have excellent moisture resistance and are less likely to aggregate and the silicon-containing oxide-coated aluminum nitride particle.

## Description of Embodiment

Hereinafter, the present invention will be described in detail.

An aspect for which a matter described in the present specification is arbitrarily selected or an aspect for which matters described in the present specification are arbitrarily combined are also included in the present invention.

In the present specification, a regulation considered to be preferable can be arbitrarily selected, and a combination of regulations considered to be preferable can be said to be more preferable.

In the present specification, an expression "XX to YY" means "XX or more and YY or less."

In the present specification, lower limit values and upper limit values described stepwise regarding preferable numerical ranges (for example, the ranges of the content or the like) can be each independently combined. For example, from a description "preferably 10 to 90 and more preferably 30 to 60", a range of "10 to 60" can also be formed by combining "the preferable lower limit value (10)" and "the more preferable upper limit value (60)."

In the present specification, "cumulative volume 90% particle diameter ($D_1$90 and $D_2$90)" indicates a particle diameter at which the cumulative value of volume accumulation reaches 90% in a certain particle size distribution, "cumulative volume 50% particle diameter ($D_1$50 and $D_2$50)" indicates a particle diameter at which the cumulative value of volume accumulation reaches 50% in a certain particle size distribution, and "cumulative volume 10% particle diameter ($D_1$10 and $D_2$10)" indicates a particle diameter at which the cumulative value of volume accumulation reaches 10% in a certain particle size distribution. $D_1$90, $D_2$90, $D_1$50, $D_2$50, $D_1$10 and $D_2$10 are all obtained from a particle size distribution

obtained by a laser diffraction and scattering method. Specifically, D90, D50 and D10 can be measured using a laser diffraction and scattering-type particle size distribution analyzer (manufactured by MicrotracBEL Corporation, product name: MICROTRAC MT3300EX2).

<Method for Producing Silicon-Containing Oxide-Coated Aluminum Nitride Particle>

A method for producing a silicon-containing oxide-coated aluminum nitride particle of the present invention is a method for producing a silicon-containing oxide-coated aluminum nitride particle including an aluminum nitride particle and a silicon-containing oxide film that covers the surface of the aluminum nitride particle.

The aluminum nitride particle in the silicon-containing oxide-coated aluminum nitride particle is a particle for which a raw material aluminum nitride particle is used as a raw material.

In addition, examples of "silicon-containing oxide" of the silicon-containing oxide film and the silicon-containing oxide-coated aluminum nitride particle include silica and composite oxides of a silicon element and an aluminum element, which will be described in detail below. In the present specification, oxides also include oxynitrides, oxycarbonitrides and the like.

In addition, the method for producing a silicon-containing oxide-coated aluminum nitride particle of the present invention has a first step of crushing an aggregated particle that is included in a raw material aluminum nitride particle to obtain a crushed aluminum nitride particle, a second step of covering the surface of the crushed aluminum nitride particle with an organic silicone compound including a structure represented by the following formula (1) to obtain an organic silicone compound-coated aluminum nitride particle, and a third step of heating the organic silicone compound-coated aluminum nitride particle at a heating temperature of 300°C or higher and lower than 1000°C, in which the decrease rate of the untamped density of the crushed aluminum nitride particle with respect to the untamped density of the raw material aluminum nitride particle (hereinafter also simply expressed as "decrease rate") is 10% or more.

[Chem. 4]

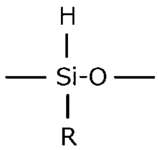

・・・ (1)

wherein, in the formula (1), R is an alkyl group having 1 to 4 carbon atoms.

The decrease rate of the untamped density of the crushed aluminum nitride particle with respect to the untamped density of the raw material aluminum nitride particle is preferably 12% or more, more preferably 14% or more and still more preferably 16% or more from the viewpoint of producing a silicon-containing oxide-coated aluminum nitride particle that is far less likely to aggregate and has excellent filling properties. The decrease rate tends to increase by strengthening the crush strength, increasing the crushing frequency, or extending the crushing time.

The upper limit value of the decrease rate of the untamped density of the crushed aluminum nitride particle with respect to the untamped density of the raw material aluminum nitride particle is not particularly limited and may be 35% or less, 30% or less, or 25% or less.

[First Step]

In the present step, an aggregated particle that is included in a raw material aluminum nitride particle is crushed to obtain a crushed aluminum nitride particle.

A crushing method is not particularly limited, and the aggregated particle can be crushed using an ordinary crusher such as a grinder (stone mill-type crusher), a high-pressure homogenizer, an ultra-high pressure homogenizer, a high-pressure impact crusher, a ball mill, a bead mill, a disc-type refiner, a conical refiner, a twin-screw kneader, a vibrating mill, a high-speed homomixer, an ultrasonic disperser, a beater, or a roll crusher. Among these, the aggregated particle is preferably crushed using a grinder from the viewpoint of producing a silicon-containing oxide-coated aluminum nitride particle that is far less likely to aggregate and has excellent filling properties.

The crushing of the aggregated particle that is included in the raw material aluminum nitride particle in the first step may be performed twice or more as necessary.

<Raw Material Aluminum Nitride Particle>

In the method for producing a silicon-containing oxide-coated aluminum nitride particle of the present invention,

as the raw material aluminum nitride particle, which is used as a raw material, a well-known particle such as a commercially available product can be used. A method for producing the raw material aluminum nitride particle is not particularly limited, and examples thereof include a direct nitriding method in which a metallic aluminum powder and nitrogen or ammonia are directly reacted, a reduction nitriding method in which alumina is heated under a nitrogen or ammonia atmosphere while being carbon-reduced to perform a nitriding reaction at the same time and the like.

In addition, as the raw material aluminum nitride particle, it is possible to use particles granulated by the sintering of aggregates of aluminum nitride particles, and it is possible to preferably use, for example, sintered granules for which high-purity aluminum nitride particles are used as a raw material.

Here, the high-purity aluminum nitride particles refer to particles having a low oxygen content and containing a small amount of metallic impurity. Specifically, for example, high-purity aluminum nitride particles having an oxygen content of 1 mass% or less and having a total content of metallic impurities (that is, metal atoms other than aluminum) of 1000 mass ppm or less are preferable in order to obtain higher thermal conductivity of the aluminum nitride particles that are included in the silicon-containing oxide-coated aluminum nitride particles.

One kind of the raw material aluminum nitride particles can be used singly or two or more kinds thereof can be used in combination.

The above-described oxygen content can be measured with an inorganic analyzer or the like accompanying an infrared detector for oxygen detection. Specifically, the oxygen content can be measured using an oxygen/nitrogen/hydrogen analyzer (ONH836: manufactured by LECO Japan Corporation).

In addition, the total content of metal atoms other than aluminum can be measured with an inductively coupled plasma (ICP) mass spectrometer or the like. Specifically, the total content of metal atoms other than aluminum can be measured using an ICP mass spectrometer (ICPMS-2030: manufactured by Shimadzu Corporation).

The cumulative volume 50% particle diameter ($D_150$) of the raw material aluminum nitride particles that are used in the present invention is not particularly limited, but is preferably 0.01 μm or more and 100 μm or less, more preferably 0.1 μm or more and 20 μm or less and still more preferably 0.5 μm or more and 5 μm or less.

When $D_150$ of the raw material aluminum nitride particles is within the above-described range, even in a case where a resin composition containing the silicon-containing oxide-coated aluminum nitride particles is used for a heat dissipation material on which a power system electronic component is mounted, it is possible to supply a thin heat dissipation material having a minimum thickness, and it is easy for films to uniformly coat the surfaces of the aluminum nitride particles, and thus the moisture resistance of the silicon-containing oxide-coated aluminum nitride particles further improves.

The untamped density of the raw material aluminum nitride particle that is used in the present invention is not particularly limited and may be 0.3 g/cm$^3$ or higher, but is preferably 1.5 g/cm$^3$ or lower, more preferably 1.2 g/cm$^3$ or lower and still more preferably 0.8 g/cm$^3$ or lower.

When the untamped density of the raw material aluminum nitride particle is within the above-described range, even in a case where a resin composition containing the silicon-containing oxide-coated aluminum nitride particles is used for a heat dissipation material on which a power system electronic component is mounted, it is possible to supply a thin heat dissipation material having a minimum thickness, and it is easy for films to uniformly coat the surfaces of the aluminum nitride particles, and thus the moisture resistance of the silicon-containing oxide-coated aluminum nitride particles further improves.

The BET specific surface area of the raw material aluminum nitride particle is preferably 0.01 to 100.0 m$^2$/g, more preferably 0.05 to 10.0 m$^2$/g and still more preferably 1.0 to 5.0 m$^2$/g from the viewpoint of producing a silicon-containing oxide-coated aluminum nitride particle that maintains the high thermal conductivity of aluminum nitride particles, has excellent moisture resistance and is less likely to aggregate.

The BET specific surface area of the raw material aluminum nitride particle can be measured by a nitrogen adsorption BET single point method by a gas flow method and, specifically, can be measured by a method described in examples.

The 45 μm-opening sieve passing rate of the raw material aluminum nitride particle is preferably 65.0 mass% or more, more preferably 70.0 mass% or more and still more preferably 75.0 mass% or more from the viewpoint of producing a silicon-containing oxide-coated aluminum nitride particle that maintains the high thermal conductivity of aluminum nitride particles, has excellent moisture resistance and is less likely to aggregate and may be 99.5 mass% or less from the viewpoint of the productivity. That is, the 45 μm-opening sieve passing rate of the silicon-containing oxide-coated aluminum nitride particle is preferably 65.0 to 99.5 mass%, more preferably 70.0 to 99.0 mass% and still more preferably 75.0 to 98.7 mass%.

The 45 μm-opening sieve passing rate of the raw material aluminum particle can be calculated by, specifically, a method described in the examples.

<Crushed Aluminum Nitride Particle>

The crushed aluminum nitride particle of the present invention can be obtained by crushing the raw material aluminum nitride particle.

The shape of the crushed aluminum nitride particle of the present invention is not particularly limited, and examples thereof include an irregular shape(crushed shape), a spherical shape, an elliptical shape, a plate shape (scale shape) and the like. In addition, in the case of the silicon-containing oxide-coated aluminum nitride particle being dispersed and contained in a resin composition as a filler, as the crushed aluminum nitride particle, the same kind of crushed aluminum nitride particles having the same shape and structure (single substance) alone may be used, but it is also possible to use a mixture of crushed aluminum nitride particles obtained by mixing two or more kinds of dissimilar crushed aluminum nitride particles having different shapes and structures in a variety of proportions.

In a case where the silicon-containing oxide-coated aluminum nitride particles are dispersed and contained in a resin composition, as the volume ratio (filling amount) of the aluminum nitride particles configuring the silicon-containing oxide-coated aluminum nitride particles to the resin composition becomes larger, the thermal conductivity of the resin composition becomes higher. Therefore, the shape of the crushed aluminum nitride particle is preferably close to a spherical shape which is likely to increase the volume ratio of the aluminum nitride particle as well as the viscosity of the resin composition by the addition of the silicon-containing oxide-coated aluminum nitride particles to a small extent.

The cumulative volume 50% particle diameter of the crushed aluminum nitride particles that are used in the present invention is not particularly limited, but is preferably 0.01 μm or more and 100 μm or less, more preferably 0.1 μm or more and 20 μm or less and still more preferably 0.5 μm or more and 5 μm or less.

The untamped density of the crushed aluminum nitride particle that is used in the present invention is not particularly limited and may be 0.3 $g/cm^3$ or higher, but is preferably 1.2 $g/cm^3$ or lower, more preferably 0.9 $g/cm^3$ or lower and still more preferably 0.6 $g/cm^3$ or lower.

[Second Step]

In the present step, the surface of the crushed aluminum nitride particle obtained in the first step is covered with an organic silicone compound including a structure represented by the following formula (1) to obtain an organic silicone compound-coated aluminum nitride particle.

The second step is preferably performed after the first step preferably within three days, more preferably within two days and still more preferably within one day.

<Organic Silicone Compound Used for films>

In the method for producing a silicon-containing oxide-coated aluminum nitride particle of the present invention, the organic silicone compound that is used as a raw material of the silicon-containing oxide films configuring the silicon-containing oxide-coated aluminum nitride particles can be used with no particular limitations as long as the organic silicone compound includes the structure represented by the formula (1) regardless of a linear, cyclic or branched form. The structure represented by the formula (1) is a hydrogen siloxane unit in which hydrogen directly bonds to a silicon atom.

In the formula (1), R, which is an alkyl group having 1 to 4 carbon atoms, is preferably a methyl group, an ethyl group, a propyl group, a t-butyl group or the like and particularly preferably a methyl group from the viewpoint of efficiently volatilizing the silicone compound and covering the surface of the aluminum nitride particle. In the method for producing a silicon-containing oxide-coated aluminum nitride particle of the present invention, the organic silicone compound that is used as a raw material is, for example, an oligomer or polymer including the structure represented by the formula (1).

As the organic silicone compound, for example, at least one of a compound represented by the following formula (2) and a compound represented by the following formula (3) is preferable.

[Chem. 5]

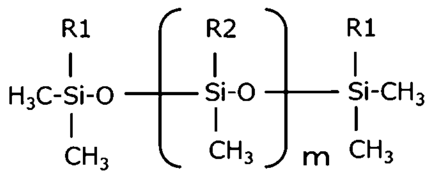 · · · (2)

Wherein, in the formula (2), R1 and R2 are each independently a hydrogen atom or a methyl group, at least one of R1 and R2 is a hydrogen atom, and m is an integer of 0 to 10.

[Chem. 6]

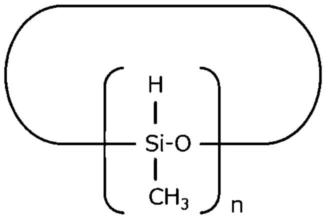

· · · (3)

Wherein, in the formula (3), n is an integer of 3 to 6.

Particularly, a cyclic hydrogen siloxane oligomer for which n in the formula (3) is four is excellent since it is possible to form a uniform film on the surface of the aluminum nitride particle. The weight-average molecular weight of the organic silicone compound including the structure represented by the formula (1) is preferably 100 or more and 2000 or less, more preferably 150 or more and 1000 or less and still more preferably 180 or more and 500 or less. When the organic silicone compound including the structure represented by the formula (1) and having a weight-average molecular weight in this range is used, it is assumed that a thin and uniform film is easily formed on the surface of the aluminum nitride particle. In the formula (2), m is preferably one.

In the present specification, the weight-average molecular weight is a polystyrene-equivalent weight-average molecular weight for which gel permeation chromatography (GPC) is used and, specifically, can be measured with a combination of a column (Shodex (registered trademark) LF-804: manufactured by Resonac Corporation) and a differential refractive index detector (Shodex (registered trademark) RI-71S: manufactured by Resonac Corporation).

In the second step, the surface of the crushed aluminum nitride particle is covered with an organic silicone compound including a structure represented by the formula (1). Such a covering method is not particularly limited, but the second step is preferably performed by vapor deposition from the viewpoint of producing a silicon-containing oxide-coated aluminum nitride particle that maintains the high thermal conductivity of aluminum nitride particles, has excellent moisture resistance and is less likely to aggregate. The vapor deposition may be performed by, for example, a gas-phase adsorption method in which the vapor of the organic silicone compound including the structure represented by the formula (1) alone or a gas mixture with an inert gas such as a nitrogen gas is vapor-deposited on the surfaces of the aluminum nitride particles placed still. In addition, the vapor of the organic silicone compound including the structure represented by the formula (1) alone or a gas mixture with an inert gas such as a nitrogen gas may be adsorbed to the particle surfaces in a state where the aluminum nitride particles have been stirred using a stirring blade, a fluidized tank, or the like.

The treatment temperature depends on the boiling point of the silicone compound including the structure represented by the formula (1) or the vapor pressure and is thus not particularly limited. The temperature is preferably 30°C or higher and 200°C or lower, more preferably 35°C or higher and 150°C or lower and still more preferably 35°C or higher and 100°C or lower.

In addition, the treatment time is not particularly limited, but is preferably one to 12 hours, more preferably two to 10 hours and still more preferably three to eight hours.

Furthermore, in case of necessity, it is also possible to pressurize or depressurize the inside of the system. As a device that can be used in this case, a closed system in which the gas in the system can be easily replaced is preferable, and, for example, a glass container, a desiccator, a CVD device or the like can be used.

Regarding the introduction timing of the organic silicone compound including the structure represented by the formula (1), the organic silicone compound may be introduced at any stage before the heating of a system that performs the treatment as long as the reaction amount of the organic silicone compound is held.

[Third Step]

In the present step, the organic silicone compound-coated aluminum nitride particles obtained in the second step are heated at a heating temperature of 300°C or higher and lower than 1000°C, preferably 300°C or higher and 900°C or lower, more preferably 300°C or higher and 850°C or lower and still more preferably 300°C or higher and 800°C or lower. This makes it possible to form silicon-containing oxide films on the aluminum nitride particle surfaces.

In a case where this heating in the third step is performed at a low temperature, silica films are formed on the aluminum nitride particle surfaces, and silica-coated aluminum nitride particles can be produced. That is, the silicon-containing oxide film is formed as a silica film. In addition, in a case where this heating in the third step is performed at a high temperature, films of a composite oxide of a silicon element and an aluminum element are formed on the aluminum nitride particle surfaces, and aluminum nitride particles coated with the composite oxide of a silicon element and an aluminum element can be produced. That is, the silicon-containing oxide film is formed as a film of a composite oxide of a silicon element and an aluminum element. When the temperature in the third step becomes high, it is assumed that aluminum

configuring the aluminum nitride particles appears on the aluminum nitride particle surfaces, and thereby forms a composite oxide together silicon that is derived from the organic silicone compound, and films of the composite oxide of a silicon element and an aluminum element are formed.

The silicon-containing oxide film is preferably a silica film from the viewpoint of producing silicon-containing oxide-coated aluminum nitride particles that maintain the high thermal conductivity of aluminum nitride particles, have excellent moisture resistance and are less likely to aggregate.

In the third step, an ordinary heating furnace can be used as long as the organic silicone compound-coated aluminum nitride particle obtained in the second step can be heated at a temperature of 300°C or higher and lower than 1000°C, preferably 300°C or higher and 950°C or lower, more preferably 400°C or higher and 900°C or lower and still more preferably 500°C or higher and 880°C or lower, that is, the organic silicone compound-coated aluminum nitride particle obtained in the second step can be held in a temperature range of 300°C or higher and lower than 1000°C, preferably 300°C or higher and 950°C or lower, more preferably 400°C or higher and 900°C or lower and still more preferably 500°C or higher and 880°C or lower.

Silica coating means coating with a thin film containing silica as a main component. However, since there is a possibility that a plurality of inorganic composites may be present in the interfaces between coated silica and the aluminum nitride particles, in the case of analysis by ToF-SIMS (time of flight secondary ion mass spectrometry: manufactured by IONTOF Japan, TOF. SIMS5), there are also cases where decomposition or the like at the time of the recombination of secondary ions and ionization also overlaps and the segments of an $AlSiO_4$ ion, a SiNO ion and the like are detected at the same time as accessory components. These composite segments that are analyzed by the ToF-SIMS analysis can also be defined as partial detected objects in a case where aluminum nitride is silicated. As a rough standard, in a state where the secondary electron amount of silica is larger than other fractions, silica can be regarded as the main component.

Furthermore, as an experiment for confirming the purity of silica by increasing accuracy, in a case where the surface of a sample having a silica film formed by the same method on an aluminum nitride polycrystalline substrate is measured by an X-ray photoelectron spectroscopy (XPS; ULVAC-PHI, Incorporated, Quantera II), almost all of the sample is assumed to have a $SiO_2$ structure from the fact that the kinetic energies of Si-derived photoelectrons that are detected almost match the standard peak of silica, that is, 103.7 eV. Depending on the heating temperature, there may be cases where an organic component remains. There is a sufficient possibility that an organic siloxane component may be present in a mixed form to an extent that the effect of the present invention is not impaired.

The content of carbon atoms can be measured with a carbon/sulfur analyzer or the like for which a non-dispersive infrared absorption method with a tubular electric furnace is used. Specifically, the content of carbon atoms can be measured using a carbon analyzer (EMIA-821: manufactured by Horiba, Ltd.).

The heating temperature (thermal treatment temperature) of the third step is 300°C or higher and lower than 1000°C, preferably 300°C or higher and 950°C or lower, more preferably 400°C or higher and 900°C or lower and still more preferably 500°C or higher and 880°C or lower. When the third step is performed within this temperature range, silicon-containing oxide films having favorable moisture resistance and thermal conductivity are formed. Specifically, when the aluminum nitride particles are heated at 300°C or higher, the moisture resistance of the silicon-containing oxide-coated aluminum nitride particle becomes favorable probably because the silicon-containing oxide films are densified and the transmission of moisture becomes difficult. In addition, when the aluminum nitride particles are heated at lower than 1000°C, preferably 950°C or lower, more preferably 900°C or lower and still more preferably 880°C or lower, the thermal conductivity of the silicon-containing oxide-coated aluminum nitride particle becomes favorable. On the other hand, when the aluminum nitride particles are heated at 1000°C or higher, the moisture resistance of the silicon-containing oxide-coated aluminum nitride particle becomes poor. In addition, when the heating temperature is 300°C or higher and lower than 1000°C, preferably 300°C or higher and 950°C or lower, more preferably 400°C or higher and 900°C or lower and still more preferably 500°C or higher and 880°C or lower, the silicon-containing oxide films are uniformly formed on the surfaces of the aluminum nitride particles. In addition, when the heating temperature is 300°C or higher, the silicon-containing oxide films become excellent in terms of insulating properties, and the heating temperature of lower than 1000°C, preferably 950°C or lower, more preferably 900°C or lower and still more preferably 880°C or lower is also effective in terms of the energy cost. The heating temperature is preferably 500°C or higher.

The heating time is preferably 30 minutes or longer and 12 hours or shorter, more preferably one hour or longer and 10 hours or shorter and still more preferably two hours or longer and eight hours or shorter. When the thermal treatment time is 30 minutes or longer, the decomposition product of the organic group (the alkyl group having 4 or less carbon atoms) of the organic silicone compound does not remain, and silicon-containing oxide films having an extremely small content of a carbon atom can be obtained on the aluminum nitride particle surfaces, which is preferable. In addition, the heating time is preferably set to 12 hours or shorter since it is possible to produce silicon-containing oxide-coated aluminum nitride particles with a favorable production efficiency.

The atmosphere for the thermal treatment in the third step is not particularly limited, and the thermal treatment may be performed, for example, under an inert gas atmosphere of $N_2$, Ar, He or the like, under an atmosphere containing a reducing gas such as $H_2$, CO or $CH_4$ or under an atmosphere containing an oxygen gas, for example, in the atmosphere (in

the air).

In addition, in order to further enhance the moisture resistance, the second step and the third step may be further performed in order after the thermal treatment of the third step. That is, a step of performing the second step and the third step in order may be repeatedly executed.

A coating method for covering the surfaces of the aluminum nitride particles with the organic silicone compound by the gas-phase adsorption method in the second step enables the formation of thin and uniform silicon-containing oxide films compared with a coating method in which a liquid treatment is performed. Therefore, even when the step of performing the second step and the third step in order is repeated, for example, approximately twice to five times, it is possible to exhibit favorable thermal conductivity of the aluminum nitride particles.

Incidentally, regarding the moisture resistance, a positive correlation is admitted between the number of times of the step of performing the second step and the third step in order and the moisture resistance. Therefore, it is possible to freely select the number of times of the step of performing the second step and the third step in order depending on the level of moisture resistance that is required in actual uses.

For silicon-containing oxide-coated aluminum nitride particles obtained by the method for producing a silicon-containing oxide-coated aluminum nitride particle of the present invention, the particle size distribution change rate of the particle size distribution width ($P_2$) of the silicon-containing oxide-coated aluminum nitride particles with respect to the particle size distribution width ($P_1$) of the raw material aluminum nitride particles that is calculated by the following formula (I) is preferably 0% or less, more preferably -0.5% or less and still more preferably -1% or less. The change rate can be decreased by sufficiently performing the crushing in the first step.

$$\text{Particle size distribution width change rate (\%)} = [(P_2/P_1) - 1] \times 100 \qquad (I)$$

$$\text{Particle size distribution width } (P_1) \text{ of raw material aluminum nitride particle} = (D_190 - D_110)/D_150 \text{ (I-1)} \qquad (I\text{-}1)$$

$$\text{Particle size distribution width } (P_2) \text{ of silicon-containing oxide-coated aluminum nitride particle} = (D_290 - D_210)/D_250 \text{ (I-2)} \qquad (I\text{-}2)$$

wherein $D_190$ is a cumulative volume 90% particle diameter of the raw material aluminum nitride particle, $D_150$ is a cumulative volume 50% particle diameter of the raw material aluminum nitride particle, $D_110$ is a cumulative volume 10% particle diameter of the raw material aluminum nitride particle, $D_290$ is a cumulative volume 90% particle diameter of the silicon-containing oxide-coated aluminum nitride particle, $D_250$ is a cumulative volume 50% particle diameter of the silicon-containing oxide-coated aluminum nitride particle, and $D_210$ is a cumulative volume 10% particle diameter of the silicon-containing oxide-coated aluminum nitride particle.

The particle size distribution width change rate that is calculated by the formula (I) is an index that indicates the degrees of aggregation of the silicon-containing oxide-coated aluminum nitride particles in the first step to the third step. It can be said that as the change rate becomes smaller, the aggregation of the silicon-containing oxide-coated aluminum nitride particles is further suppressed. When the change rate is 0% or less, the silicon-containing oxide-coated aluminum nitride particle is micronized, and it becomes easy to control the properties of filling a variety of materials by precise particle size mixing. In addition, when aggregation is suppressed, and the silicon-containing oxide-coated aluminum nitride particles are micronized, since there is no need to crush aggregated particles at the time of preparing the composition, the high thermal conductivity of the aluminum nitride particle is maintained and the moisture resistance is excellent in the silicon-containing oxide-coated aluminum nitride particle.

The silicon-containing oxide-coated aluminum nitride particles obtained by the method for producing a silicon-containing oxide-coated aluminum nitride particle of the present invention maintain high thermal conductivity derived from the aluminum nitride particles and have excellent moisture resistance and thus can be widely applied as fillers in the use of heat dissipation material that are used in the electrical and electronic field and the like.

<Silicon-Containing Oxide-Coated Aluminum Nitride Particle>

The silicon-containing oxide-coated aluminum nitride particle of the present invention includes an aluminum nitride particle and a silicon-containing oxide film that covers a surface of the aluminum nitride particle, the untamped density is less than 0.58 g/cm$^3$, and the ammonia concentration measured under the following measurement conditions is less than 10 mg/L.

Measurement conditions: A mixed solution obtained by adding and mixing 3 g of the silica-coated aluminum nitride particle to 17 g of a hydrochloric acid aqueous solution having a pH of 4 is heated at 134°C for two hours and then left to stand at room temperature (25°C) for one hour to fabricate a measurement sample, and the ammonia concentration in the measurement sample at 25°C is measured using an ammonia electrode.

The silicon-containing oxide-coated aluminum nitride particle of the present invention maintains the high thermal conductivity of the aluminum nitride particle, has excellent moisture resistance, is less likely to aggregate and has favorable properties of filling a variety of materials.

The silicon-containing oxide-coated aluminum nitride particle of the present invention can be obtained by the method for producing a silicon-containing oxide-coated aluminum nitride particle of the present invention. Examples of the "silicon-containing oxide" in the silicon-containing oxide film and the silicon-containing oxide-coated aluminum nitride particle include the above-described silica and the above-described composite oxide of a silicon element and an aluminum element. Oxides also include oxynitrides, oxycarbonitrides and the like.

The untamped density of the silicon-containing oxide-coated aluminum nitride particle is preferably 0.57 g/cm$^3$ or lower and more preferably 0.56 g/cm$^3$ or lower from the viewpoint of obtaining a silicon-containing oxide-coated aluminum nitride particle that is far less likely to aggregate and has excellent filling properties and is preferably 0.3 g/cm$^3$ or higher and more preferably 0.35 g/cm$^3$ or higher and still more preferably 0.4 g/cm$^3$ or higher from the viewpoint of the productivity. That is, the untamped density of the silicon-containing oxide-coated aluminum nitride particle is preferably 0.3 g/cm$^3$ or higher and lower than 0.58 g/cm$^3$, more preferably 0.35 to 0.57 g/cm$^3$ and still more preferably 0.4 to 0.57 g/cm$^3$.

The ammonia concentration of the silicon-containing oxide-coated aluminum nitride particle of the present invention measured under the above-described measurement conditions is less than 10 mg/L. For the measurement of the ammonia concentration, the silicon-containing oxide-coated aluminum nitride particle is exposed to a hydrochloric acid aqueous solution that is an acidic solution adjusted to a pH of 4. In the acidic solution, a hydrolysis reaction of the silicon-containing oxide-coated aluminum nitride particle is further accelerated than in the air, and ammonia is generated together with the occurrence of a hydrolysis. Therefore, the measurement of the ammonia concentration under the above-described measurement conditions is an acceleration test of moisture resistance. In addition, the ammonia concentration is an index of moisture resistance, and a silicon-containing oxide-coated aluminum nitride particle having an ammonia concentration of less than 10 mg/L under the above-described measurement conditions can be said to have excellent moisture resistance.

In addition, the use of the hydrochloric acid aqueous solution having a pH of 4 also makes it possible to compare chemical resistance together.

The ammonia concentration is preferably 8 mg/L or lower, more preferably 6 mg/L or lower, still more preferably 5 mg/L or lower and particularly preferably 1.5 mg/L or lower and may be 0 mg/L.

The BET specific surface area of the silicon-containing oxide-coated aluminum nitride particle is preferably 0.1 to 20.0 m$^2$/g, more preferably 0.5 to 10.0 m$^2$/g and still more preferably 1.0 to 5.0 m$^2$/g from the viewpoint of the properties of filling a variety of materials.

The BET specific surface area of the silicon-containing oxide-coated aluminum nitride particle can be measured by the nitrogen adsorption BET single point method by the gas flow method and specifically can be measured by the method described in the examples.

The 45 μm-opening sieve passing rate of the silicon-containing oxide-coated aluminum nitride particle is preferably 70 mass% or more, more preferably 75 mass% or more and still more preferably 80 mass% or more from the viewpoint of the properties of filling a variety of materials and may be 99.5 mass% or less from the viewpoint of the productivity.

The 45 μm-opening sieve passing rate of the silicon-containing oxide-coated aluminum nitride particle can be calculated by, specifically, the method described in the examples.

From the viewpoint of the moisture resistance, the content of a carbon atom in the silicon-containing oxide-coated aluminum nitride particle is preferably as low as possible. In the silicon-containing oxide-coated aluminum nitride particle of the present invention, since the organic silicone compound having the structure represented by the formula (1) is used as a raw material, the silicon-containing oxide-coated aluminum nitride particle contains a carbon atom in many cases, and there are cases where the silicon-containing oxide-coated aluminum nitride particle contains, for example, 50 mass ppm or more in terms of carbon atoms, furthermore, 60 mass ppm or more in terms of carbon atoms, and the silicon-containing oxide-coated aluminum nitride particle may contain 100 mass ppm or less in terms of carbon atoms.

The content of a silicon atom (ΔSi amount) in the silicon-containing oxide film of the silicon-containing oxide-coated aluminum nitride particle is preferably 20 to 2000 mass ppm, more preferably 30 to 1950 mass ppm and still more preferably 40 to 1900 mass ppm from the viewpoint of making the moisture resistance superior.

The ΔSi amount can be measured by an ICP method and, specifically, can be measured by the method described in the examples.

<Method for Producing Resin Composition>

A resin composition can be produced using the silicon-containing oxide-coated aluminum nitride particle of the present invention. That is, a method for producing a resin composition in the present invention has a production step of producing silicon-containing oxide-coated aluminum nitride particles by the method for producing a silicon-containing

oxide-coated aluminum nitride particle of the present invention and a mixing step of mixing the silicon-containing oxide-coated aluminum nitride particles and a resin. Examples of a silicon-containing oxide film and "silicon-containing oxide" of the silicon-containing oxide-coated aluminum nitride particle include the silica and composite oxide of a silicon element and an aluminum element. Oxides also include oxynitrides, oxycarbonitrides and the like.

The silicon-containing oxide-coated aluminum nitride particles of the present invention are not easily aggregated and have favorable properties of filling resin compositions, which makes it possible to easily produce the resin composition. In addition, since the silicon-containing oxide-coated aluminum nitride particles maintain the high thermal conductivity of aluminum nitride particles and have improved moisture resistance, a resin composition to be obtained by the method for producing a resin composition is excellent in terms of moisture resistance and thermal conductivity.

In the mixing step, the silicon-containing oxide-coated aluminum nitride particles produced by the method for producing a silicon-containing oxide-coated aluminum nitride particle and a resin are mixed together.

The resin that is mixed in the mixing step is not particularly limited, but is preferably a thermosetting resin, a thermoplastic resin or a mixture of a thermosetting resin and a thermoplastic resin since a resin composition to be obtained will have excellent heat resistance. Examples of the thermosetting resin include a silicone resin such as polydimethylsiloxane, an epoxy resin, a phenolic resin, a bismaleimide resin, a cyanate resin, a urethane resin, a (meth)acrylic resin, a vinyl ester resin, an unsaturated polyester resin, a polyvinyl alcohol acetal resin and the like, and these can be used singly or two or more thereof can be mixed together and used. Furthermore, a mixture obtained by adding a curing agent and a curing accelerator to a thermosetting resin may also be used. In particular, an epoxy resin is preferable since the heat resistance after curing, the adhesiveness and the electrical characteristics are favorable, and a silicone resin is preferably in uses where flexible adhesiveness matters.

As the silicone resin, there are an addition reaction-curable silicone resin, a condensation reaction-curable silicone resin, an organic peroxide-curable silicone resin and the like, and these can be used singly or two or more of these resins having different viscosities can be combined together and used. Particularly, in a case where a resin composition to be obtained is used in uses where flexible adhesiveness matters, examples of the silicone resin include addition reaction-curable liquid silicone resins that do not generate a by-product, which can be a causative substance of air bubbles or the like, and a silicone resin-cured product can be obtained by reacting an organopolysiloxane having an alkenyl group, which is a base polymer, and an organopolysiloxane having a Si-H group, which is a crosslinking agent, in the presence of a curing agent at normal temperature or by heating. As specific examples of the organopolysiloxane that is the base polymer, for example, there are organopolysiloxanes having a vinyl group, an allyl group, a propenyl group, a hexenyl group or the like as the alkenyl group. Particularly, a vinyl group is preferable as the organopolysiloxane. In addition, for example, a platinum metal-based curing catalyst can be used as a curing catalyst, and an adjusted amount of the curing catalyst can be added and used to realize an intended hardness of a resin cured product.

Examples of the epoxy resin include bifunctional glycidyl ether-type epoxy resins such as a bisphenol A-type epoxy resin, a bisphenol F-type epoxy resin, a bisphenol S-type epoxy resin, a hydrogenated bisphenol A-type epoxy resin and a biphenyl-type epoxy resin; glycidyl ester-type epoxy resins such as hexahydrophthalic acid glycidyl ester and dimer acid glycidyl ester; linear aliphatic epoxy resins such as epoxidized polybutadiene and epoxidized soybean oil; heterocyclic epoxy resins such as triglycidyl isocyanurate; glycidylamine-type epoxy resins such as N,N,N',N'-tetraglycidyl-4,4'-diaminodiphenylmethane, N,N,N',N'-tetraglycidyl-1,3-benzenedi(methanamine), 4-(glycidyloxy)-N,N-diglycidylaniline, 3-(glycidyloxy)-N,N-diglycidylaniline; polyfunctional glycidyl ether-type epoxy resins such as a phenol novolac-type epoxy resin, a cresol novolac-type epoxy resin, a biphenylaralkyl-type epoxy resin, a naphthalenearalkyl-type epoxy resin, a tetrafunctional naphthalene-type epoxy resin and a triphenylmethane-type epoxy resin; and the like. The above-described epoxy resins can be used singly or two or more thereof can be mixed together and used.

In the case of using the above-described epoxy resin, a curing agent, a curing accelerator or the like may be blended therewith. Examples of the curing agent include alicyclic acid anhydrides such as methyltetrahydrophthalic anhydride, methylhexahydrophthalic anhydride and hymic acid anhydride; aliphatic acid anhydrides such as dodecenyl succinic anhydride; aromatic acid anhydrides such as phthalic anhydride and trimellitic anhydride; bisphenols such as bisphenol A, bisphenol F and bisphenol S; phenol resins such as a phenol/formaldehyde resin, a phenol/aralkyl resin, a naphthol/aralkyl resin and a phenol-dicyclopentadiene copolymer resin; organic dihydrazides such as dicyandiamide and adipic acid dihydrazide; and the like, and examples of the curing catalyst include amines such as tris(dimethylaminomethyl)phenol, dimethylbenzylamine, 1,8-diazabicyclo(5,4,0)undecene and derivatives thereof; imidazoles such as 2-methylimidazole, 2-ethyl-4-methylimidazole, 2-phenylimidazole and derivatives thereof; and the like. These can be used singly or two or more thereof can be combined together and used.

In the mixing step, other than the silicon-containing oxide-coated aluminum nitride particles, a filler such as boron nitride, alumina, silica or zinc oxide, which is normally used, may be jointly used.

In the mixing step, furthermore, a plasticity imparting agent such as silicone, urethane acrylate, a butyral resin, acrylic rubber, diene-based rubber or a copolymer thereof, a silane-based coupling agent, a titanium-based coupling agent, an inorganic ion scavenger, a pigment, a dye, a diluent, a solvent or the like can be appropriately added as necessary.

A mixing method in the mixing step is not particularly limited, and examples thereof include methods in which the silicon-containing oxide-coated aluminum nitride particles, a resin, other additives and the like are heated, mixed, dissolved and kneaded as necessary all at once or in parts with one or an appropriate combination of dispersion/dissolution devices such as a mortar machine, a planetary mixer, a planetary centrifugal mixer, a kneader and a roll mill.

In addition, an obtained resin composition can also be molded in a sheet shape and reacted as necessary to produce a heat dissipation sheet. The above-described resin composition and heat dissipation sheet can be preferably used in the adhesion uses and the like of semiconductor power devices, power modules and the like.

Examples of a method for producing the heat dissipation sheet include a method in which the resin composition is molded with a compression press or the like in a manner that both surfaces are sandwiched with base material films, a method in which the resin composition is applied onto a base material film using a device such as a bar coater, screen printing, a blade coater, a die coater or a comma coater and the like. Furthermore, for the heat dissipation sheet after molding and application, it is also possible to add a step of removing a solvent, B-staging by heating or the like or a treatment step of complete curing or the like. As described above, a variety of forms of heat dissipation sheets can be obtained depending on steps, and it becomes possible to widely deal with intended use fields or methods used.

It is possible to use a solvent to improve workability at the time of applying or forming the resin composition on the base material film. The solvent is not particularly limited, and it is possible to use one or a mixture of two or more of a ketone-based solvent such as acetone, methyl ethyl ketone, methyl isobutyl ketone, cyclopentanone or cyclohexanone; an ether-based solvent such as 1,4-dioxane, tetrahydrofuran or diglyme; a glycol ether-based solvent such as methyl cellosolve, ethyl cellosolve, propylene glycol monomethyl ether, propylene glycol monoethyl ether, propylene glycol monobutyl ether, propylene glycol monomethyl ether acetate, propylene glycol monoethyl ether acetate or diethylene glycol methyl ethyl ether; other benzyl alcohol; N-methylpyrrolidone; γ-butyrolactone; ethyl acetate; N,N-dimethylformamide; and the like.

In order to form the resin composition in a sheet shape, sheet formability that holds the sheet shape becomes necessary. In order to obtain sheet formability, it is possible to add a high-molecular-weight component to the resin composition. Examples of the high-molecular-weight component include a phenoxy resin, a polyimide resin, a polyamide resin, a polycarbodiimide resin, a cyanate ester resin, a (meth)acrylic resin, a polyester resin, a polyethylene resin, a polyether sulfone resin, a polyetherimide resin, a polyvinyl acetal resin, a urethane resin, acrylic rubber and the like. Among these, from the viewpoint of excellent heat resistance and film formability, a phenoxy resin, a polyimide resin, a (meth)acrylic resin, acrylic rubber, a cyanate ester resin and a polycarbodiimide resin are preferable, and a phenoxy resin, a polyimide resin, a (meth)acrylic resin and acrylic rubber are more preferable. These can be used singly, as a mixture or copolymer of two or more thereof, or the like.

The weight-average molecular weight of the high-molecular-weight component is preferably 10000 or more and 100000 or less and more preferably 20000 or more and 50000 or less.

A favorable sheet shape having favorable handleability can be held by adding a component having a weight-average molecular weight within the above-described range.

The amount of the high-molecular-weight component added is not particularly limited, but is preferably 0.1 mass% or more and 20 mass% or less, more preferably 1 mass% or more and 15 mass% or less and still more preferably 2 mass% or more and 10 mass% or less with respect to the resin composition in order to hold the sheet physical properties. When 0.1 mass% or more and 20 mass% or less of the high-molecular-weight component is added, the handleability is also favorable, and a favorable sheet or film is formed.

The base material film that is used during the production of the heat dissipation sheet is not particularly limited as long as base material films are capable of withstanding step conditions for heating, drying and the like during production. Examples thereof include films made of a polyester having an aromatic ring such as polyethylene terephthalate (PET) or polybutylene terephthalate (PBT), a polypropylene film, a polyimide film, a polyetherimide film and the like. The above-described film may be a multilayer film in which two or more films are combined together or may be a film having a surface treated with a silicone-based or other mold release agent. The thickness of the base material film is preferably 10 μm or more and 100 μm or less.

The thickness of the heat dissipation sheet formed on the base material film is preferably 20 μm or more and 500 μm or less and more preferably 50 μm or more and 200 μm or less. When the thickness of the heat dissipation sheet is 20 μm or more, a heat dissipation sheet having a uniform composition can be obtained, and, when the thickness is 500 μm or less, favorable heat dissipation properties can be obtained.

<Resin Composition>

A resin composition of the present invention contains the silicon-containing oxide-coated aluminum nitride particle.

Since the silicon-containing oxide-coated aluminum nitride particle maintains the high thermal conductivity of the aluminum nitride particle and improves moisture resistance, the resin composition of the present invention has excellent moisture resistance and thermal conductivity.

A resin that the resin composition of the present invention contains is not particularly limited, but is preferably the thermosetting resin, the thermoplastic resin or the mixture of a thermosetting resin and a thermoplastic resin described in the <method for producing resin composition> since a resin composition to be obtained will have excellent heat resistance.

The resin composition may contain a filler such as boron nitride, alumina, silica or zinc oxide, which is normally used, other than the silicon-containing oxide-coated aluminum nitride particle.

The total content of the silicon-containing oxide-coated aluminum nitride particle and the filler other than the silicon-containing oxide-coated aluminum nitride particle in a resin composition to be obtained is not particularly limited as long as a desired amount of the resin composition can be obtained, but is preferably 50 mass% or more and 99 mass% or less, more preferably 60 mass% or more and 97 mass% or less and still more preferably 70 mass% or more and 95 mass% or less. When the total content is 50 mass% or more, favorable heat dissipation properties can be exhibited, and, when the total content is 99 mass% or less, favorable workability can be obtained at the time of using the resin composition.

In addition, the content of the silicon-containing oxide-coated aluminum nitride particles in a resin composition to be obtained is preferably 30 mass% or more and 100 mass% or less, more preferably 40 mass% or more and 100 mass% or less and still more preferably 50 mass% or more and 100 mass% or less of the total content of the silicon-containing oxide-coated aluminum nitride particle and the filler other than the silicon-containing oxide-coated aluminum nitride particle. When the total content is 30 mass% or more, favorable heat dissipation properties can be exhibited.

The resin composition of the present invention may further contain a plasticity imparting agent such as silicone, urethane acrylate, a butyral resin, acrylic rubber, diene-based rubber or a copolymer thereof, a silane-based coupling agent, a titanium-based coupling agent, an inorganic ion scavenger, a pigment, a dye, a diluent, a solvent or the like as necessary.

The resin composition of the present invention can be obtained by the method for producing a resin composition of the present invention.

Examples

Next, the present invention will be specifically described using examples, but the present invention is not limited to these examples.

<Methods for Measuring and Calculating Physical Properties>

[Cumulative Volume 50% Particle Diameter ($D_150$ and $D_250$)]

The cumulative volume 50% particle diameter ($D_150$ and $D_250$) was obtained from a particle diameter at which the cumulative value reached 50% in a particle size distribution measured using a laser diffraction and scattering-type particle size distribution analyzer (manufactured by MicrotracBEL Corporation, product name: MICROTRAC MT3300EX2).

[Particle Size Distribution Width]

The cumulative volume 90% particle diameter ($D_190$ and $D_290$) and the cumulative volume 10% particle diameter ($D_110$ and $D_210$) were obtained using the laser diffraction and scattering-type particle size distribution analyzer (manufactured by MicrotracBEL Corporation, product name: MICROTRAC MT3300EX2) in the same manner as in the measurement of the cumulative volume 50% particle diameter ($D_150$ and $D_250$). The particle size distribution width ($P_1$) of raw material aluminum nitride particles and the particle size distribution width ($P_2$) of silicon-containing oxide-coated aluminum nitride particles were calculated by the following formulae using the obtained cumulative volume 10% particle diameter, cumulative volume 50% particle diameter and cumulative volume 90% particle diameter.

particle size distribution width ($P_1$) of raw material aluminum nitride particle = $(D_190 - D_110)/D_150$ (I-1) (I-1)

particle size distribution width ($P_2$) of silicon-containing oxide-coated aluminum nitride particle = $(D_290 - D_210)/D_250$ (I-2) (I-2)

[Particle Size Distribution Width Change Rate]

The change rate of the particle size distribution width ($P_2$) of the silicon-containing oxide-coated aluminum nitride particles with respect to the particle size distribution width ($P_1$) of the raw material aluminum nitride particles was calculated by the following formula (I) from $P_1$ and $P_2$ obtained in the [particle size distribution width].

$$\text{Particle size distribution width change rate (\%)} = [(P_2/P_1) - 1] \times 100 \qquad (I)$$

[BET Specific Surface Area]

The BET specific surface area was measured by a BET single point method by nitrogen adsorption using a specific surface area measuring instrument (manufactured by MOUNTECH Co., Ltd., trade name: Macsorb HM model-1210). As an adsorption gas, a gas mixture of 70 vol% of He and 30 vol% of $N_2$ was used.

[45 μm-Opening Sieve Passing Rate]

The 45 μm-opening sieve passing rate (mass%) was calculated by the following procedure.

(1) 5 g of particles to be measured (raw material aluminum nitride particles or silicon-containing oxide-coated aluminum nitride particles) and 50 mL of distilled water were added into a 100 mL container, stirred with a stirring bar 30 times, and made to flow into a sieve with 45 μm-openings.
(2) The particles were washed using water at a flow rate of 10 L/min for five minutes, and particles with small particle sizes were washed away through the sieve.
(3) Particles remaining on the sieve were collected using filter paper (JIS Type 5A qualitative filter paper), and the collected particles were heated at 110°C for one hour together with the filter paper.
(4) The heated particles were naturally cooled for one hour in a desiccator.
(5) The naturally-cooled particles were weighed, and the proportion of the particles which passed through the sieve was calculated from the obtained result and regarded as the 45 μm-opening sieve passing rate.

[45 μm-Opening Sieve Passing Rate Ratio]

The sieve passing rate of the silicon-containing oxide-coated aluminum nitride particles obtained in the [45 μm-opening sieve passing rate] was divided by the sieve passing rate of the raw material aluminum nitride particles obtained in the [45 μm-opening sieve passing rate], thereby calculating the 45 μm-opening sieve passing rate ratio.

[Untamped Density]

The untamped density was measured according to JIS R 9301-2-3: 1999 "Alumina powder-Determination of physical properties-3." Specifically, the silicon-containing oxide-coated aluminum nitride was filled in a 200 mL cylinder, levelled along the cylinder upper surface, and then weighed, and the mass was divided by the cylinder volume to obtain the untamped density. In addition, for the raw material aluminum nitride particle and the crushed aluminum nitride particle, the untamped densities were measured in the same manner.
In addition, the decrease rate of the untamped density of the crushed aluminum nitride particle with respect to the untamped density of the raw material aluminum nitride particle was calculated.

[Ammonia Concentration]

The ammonia concentration in a specific solution, which serves as an index of the moisture resistance of a particle, was calculated by the following procedure.

(1) 17 g of a hydrochloric acid aqueous solution having a pH of 4 and 3 g of the particles (raw material aluminum nitride particles or silicon-containing oxide-coated aluminum nitride particles) were added into a 50 mL TEFLON container and sealed.
(2) TEFLON container as a whole was put into a stainless steel pressure-resistant container, heated at 134°C for two hours, and then left to stand at room temperature (25°C) for one hour to fabricate a measurement sample.
(3) The ammonia concentration in a supernatant of the obtained measurement sample was measured using an ammonia electrode (ammonia electrode 5002A: manufactured by Horiba, Ltd.) under a temperature condition of 25°C. The measurement results are shown in the "ammonia concentration" column in the table.

[Content of Silicon Atom (Si Amount) of Silicon-Containing Oxide-Coated Aluminum Nitride Particle]

The content of a silicon atom (Si amount) of the silicon-containing oxide-coated aluminum nitride particle was calculated by the following procedure.

(1) 10 mL of a solution obtained by mixing 97 mass% of sulfuric acid (super special grade, manufactured by Wako Pure Chemical Industries, Ltd.) and ion exchange water at a volume ratio of 1:2 and 0.5 g of the silicon-containing oxide-coated aluminum nitride particles were added into a 20 mL TEFLON container.
(2) TEFLON container as a whole was put into a stainless steel pressure-resistant container and heated at 230°C for 15 hours, and the added silicon-containing oxide-coated aluminum nitride particles were dissolved.
(3) A solution obtained by dissolving the silicon-containing oxide-coated aluminum nitride particles was taken out, the concentration of a silicon atom was measured using ICP (manufactured by Shimadzu Corporation, ICPS-7510), and the content (unit: mass ppm) of a silicon atom (Si amount) of the silicon-containing oxide-coated aluminum nitride particle was calculated from this measured concentration of a silicon atom.

[Method for Calculating Content of Silicon Atom (ΔSi Amount) in Silicon-Containing Oxide Film of Silicon-Containing Oxide-Coated Aluminum Nitride Particle]

The content (unit: mass ppm) of a silicon atom (ΔSi amount) in the silicon-containing oxide film of the silicon-containing oxide-coated aluminum nitride particle was calculated by subtracting the silicon content of the crushed aluminum nitride alone calculated by the same method from the content of a silicon atom (Si amount) of the silicon-containing oxide-coated aluminum nitride particle calculated by the above-described calculation method.

[Thermal Conductivity of Resin Molded Article]

The thermal conductivity (unit: W/m·K) of a resin molded article test piece fabricated in each of the examples and comparative examples was measured according to ISO 22007-2: 2015 through a hot disc method in which a thermophysical property-measuring instrument (manufactured by Kyoto Electronics Manufacturing Co., Ltd., "TPS 2500 S") was used.

[Individual Materials]

Individual materials used in the examples and comparative examples are as described below.

· Raw material aluminum nitride particle A: Trade name "N01P," manufactured by Toyo Aluminium K.K., D50 = 1.3 μm
· Raw material aluminum nitride particle B: Trade name "JM," manufactured by Toyo Aluminium K.K., D50 = 2.8 μm
· AKP-30: High-purity alumina: Trade name "AKP-30," manufactured by Sumitomo Chemical Co., Ltd., D50 = 0.3 μm)
· EG-3100 (A): Polydimethylsiloxane gel (trade name: DOWSIL™ EG-3100, manufactured by Dow Toray Co., Ltd., viscosity: 420 mPa·s, mixture of vinyl oil and platinum catalyst)
· EG-3100 (B): Polydimethylsiloxane gel (trade name: DOWSIL™ EG-3100, manufactured by Dow Toray Co., Ltd., viscosity: 320 mPa·s, mixture of vinyl oil and crosslinking agent)

[Example 1]

(Production of Silicon-Containing Oxide-Coated Aluminum Nitride Particles)

A continuous crushing treatment was performed on the raw material aluminum nitride particles A using a stone mill-type crusher ("Supermasscolloider MKCA6-5J," manufactured by Masuko Sangyo Co., Ltd.) at a rotation speed of 2000 rpm with a clearance of 50 μm in a particle feed amount of 20 kg/h, and crushed aluminum nitride particles A were obtained. The obtained crushed aluminum nitride particles A were stored in a desiccator, and a second step was performed within 24 hours from the crushing treatment. A crushing treatment was performed on the raw material aluminum nitride particles B in the same manner as described above, crushed aluminum nitride particles B were obtained and stored in a desiccator, and a second step was performed within 24 hours from the crushing treatment.
In the second step, the surfaces of the crushed aluminum nitride particles were coated using a reaction device based on a large oven having a reaction vessel inner capacity of 250 L. 50 g of the crushed aluminum nitride particles A and 50 g of the crushed aluminum nitride particles B were each uniformly spread in a separate stainless steel tray and left still in the reaction vessel. Next, 52 g of an organic silicone compound A for which n was four in a formula (3) (product name "2,4,6,8-tetramethylcyclotetrasiloxane," manufactured by Tokyo Chemical Industry Co., Ltd.) was put into glass Petri dishes and placed still in the reaction vessels, and the reaction vessels were closed. Since a reaction generates a hydrogen gas, the insides of the reaction vessels were vacuumed in advance until the oxygen concentration reached 8 vol% or less, which is the explosion limit, a nitrogen gas was then made to flow into the reaction vessels, and the inside pressures were returned to normal pressure (0.1 MPa). After that, the reaction vessels was heated at 80°C for 7.5 hours to vaporize the organic silicone compound A, and organic silicone compound-coated aluminum nitride particles A and

organic silicone compound-coated aluminum nitride particles B were obtained.

After the second step was finished, the organic silicone compound-coated aluminum nitride particles A and the organic silicone compound-coated aluminum nitride particles B were each put into an alumina crucible and heated at 700°C for three hours under atmosphere as a third step, thereby obtaining silicon-containing oxide-coated aluminum nitride particles 1-A and 1-B, which were silica-coated aluminum nitride particles.

The measurement and calculation results of the physical properties of the silicon-containing oxide-coated aluminum nitride particles 1-A and 1-B are shown in Table 1.

(Production of Resin Molded Articles)

50 parts by mass of EG-3100 (A) (polydimethylsiloxane gel, trade name: DOWSIL™ EG-3100, manufactured by Dow Toray Co., Ltd.), 50 parts by mass of EG-3100 (B), 500 parts by mass of the silicon-containing oxide-coated aluminum nitride particles 1-A, and 225 parts by mass of AKP-30 were stirred and mixed using a planetary centrifugal mixer (manufactured by Thinky Corporation, trade name: ARV-310P) at a rotation speed of 1000 rpm for 30 seconds while being depressurized, and a resin composition was obtained. The obtained resin composition was cooled to room temperature (25°C), and the resin composition was sandwiched by two PET base materials and made into a laminate, the laminate was stretched to a thickness of 2 mm with a rolling roll and then cured by a thermal treatment at 100°C for 15 minutes, thereby obtaining a resin composition molded article test piece 1-A.

A resin composition molded article test piece 1-B was obtained in the same manner as in the above-described production except that the silicon-containing oxide-coated aluminum nitride particles 1-B were used instead of the silicon-containing oxide-coated aluminum nitride particles 1-A.

The measurement and calculation results of the physical properties of the resin composition molded article test pieces 1-A and 1-B are shown in Table 1.

[Example 2]

(Production of Silicon-Containing Oxide-Coated Aluminum Nitride Particles)

Silicon-containing oxide-coated aluminum nitride particles 2-A (particles obtained by coating the crushed aluminum nitride particles A with the organic silicone compound A and then performing the heating of the third step) and 2-B (particles obtained by coating the crushed aluminum nitride particles B with the organic silicone compound A and then performing the heating of the third step), which were silica-coated aluminum nitride particles, were obtained in the same manner as in Example 1 except that the amount of the organic silicone compound A used in the second step was set to 10 g.

The measurement and calculation results of the physical properties of the silicon-containing oxide-coated aluminum nitride particles 2-A and 2-B are shown in Table 1.

(Production of Resin Molded Articles)

A resin composition molded article test piece 2-A was obtained in the same manner as in Example 1 except that the silicon-containing oxide-coated aluminum nitride particles 2-A were used instead of the silicon-containing oxide-coated aluminum nitride particles 1-A. In addition, a resin composition molded article test piece 2-B was obtained in the same manner as in Example 1 except that the silicon-containing oxide-coated aluminum nitride particles 2-B were used instead of the silicon-containing oxide-coated aluminum nitride particles 1-A.

The measurement and calculation results of the physical properties of the resin composition molded article test pieces 2-A and 2-B are shown in Table 1.

[Example 3]

(Production of Silicon-Containing Oxide-Coated Aluminum Nitride Particles)

Silicon-containing oxide-coated aluminum nitride particles 3-A (particles obtained by coating the crushed aluminum nitride particles A with the organic silicone compound A and then performing the heating of the third step) and 3-B (particles obtained by coating the crushed aluminum nitride particles B with the organic silicone compound A and then performing the heating of the third step), which were silica-coated aluminum nitride particles, were obtained in the same manner as in Example 1 except that the amount of the organic silicone compound A used in the second step was set to 340 g.

The measurement and calculation results of the physical properties of the silicon-containing oxide-coated

aluminum nitride particles 3-A and 3-B are shown in Table 1.

(Production of Resin Molded Articles)

A resin composition molded article test piece 3-A was obtained in the same manner as in Example 1 except that the silicon-containing oxide-coated aluminum nitride particles 3-A were used instead of the silicon-containing oxide-coated aluminum nitride particles 1-A. In addition, a resin composition molded article test piece 3-B was obtained in the same manner as in Example 1 except that the silicon-containing oxide-coated aluminum nitride particles 3-B were used instead of the silicon-containing oxide-coated aluminum nitride particles 1-A.
The measurement and calculation results of the physical properties of the resin composition molded article test pieces 3-A and 3-B are shown in Table 1.

[Comparative Example 1]

(Production of Silicon-Containing Oxide-Coated Aluminum Nitride Particles)

Silicon-containing oxide-coated aluminum nitride particles 4-A (particles obtained by coating the raw material aluminum nitride particles A with the organic silicone compound A and then performing the heating of the third step) and 4-B (particles obtained by coating the raw material aluminum nitride particles B with the organic silicone compound A and then performing the heating of the third step), which were silica-coated aluminum nitride particles, were obtained in the same manner as in Example 3 except that the first step was not performed.
The measurement and calculation results of the physical properties of the silicon-containing oxide-coated aluminum nitride particles 4-A and 4-B are shown in Table 1.

(Production of Resin Molded Articles)

A resin composition molded article test piece 4-A was obtained in the same manner as in Example 3 except that the silicon-containing oxide-coated aluminum nitride particles 4-A were used instead of the silicon-containing oxide-coated aluminum nitride particles 3-A. In addition, a resin composition molded article test piece 4-B was obtained in the same manner as in Example 3 except that the silicon-containing oxide-coated aluminum nitride particles 4-B were used instead of the silicon-containing oxide-coated aluminum nitride particles 3-A.
The measurement and calculation results of the physical properties of the resin composition molded article test pieces 4-A and 4-B are shown in Table 1.

[Comparative Example 2]

(Production of Silicon-Containing Oxide-Coated Aluminum Nitride Particles)

Silicon-containing oxide-coated aluminum nitride particles 5-A (particles obtained by coating the raw material aluminum nitride particles A with the organic silicone compound A and then performing the heating of the third step) and 5-B (particles obtained by coating the raw material aluminum nitride particles B with the organic silicone compound A and then performing the heating of the third step), which were silica-coated aluminum nitride particles, were obtained in the same manner as in Example 1 except that the first step was not performed.
The measurement and calculation results of the physical properties of the silicon-containing oxide-coated aluminum nitride particles 5-A and 5-B are shown in Table 1.

(Production of Resin Molded Articles)

A resin composition molded article test piece 5-A was obtained in the same manner as in Example 1 except that the silicon-containing oxide-coated aluminum nitride particles 5-A were used instead of the silicon-containing oxide-coated aluminum nitride particles 1-A. In addition, a resin composition molded article test piece 5-B was obtained in the same manner as in Example 1 except that the silicon-containing oxide-coated aluminum nitride particles 5-B were used instead of the silicon-containing oxide-coated aluminum nitride particles 1-A.
The measurement and calculation results of the physical properties of the resin composition molded article test pieces 5-A and 5-B are shown in Table 1.

[Comparative Example 3]

(Production of Silicon-Containing Oxide-Coated Aluminum Nitride Particles)

Silicon-containing oxide-coated aluminum nitride particles 5-A and 5-B, which were silica-coated aluminum nitride particles, were obtained in the same manner as in Comparative Example 2, and a continuous crushing treatment was performed on the silicon-containing oxide-coated aluminum nitride particles 5-A and 5-B using a stone mill-type crusher ("Supermasscolloider MKCA6-5J," manufactured by Masuko Sangyo Co., Ltd.) at a rotation speed of 2000 rpm with a clearance of 50 μm in a particle feed amount of 20 kg/h, and silicon-containing oxide-coated aluminum nitride particles 6-A and 6-B were obtained.

The measurement and calculation results of the physical properties of the silicon-containing oxide-coated aluminum nitride particles 6-A and 6-B are shown in Table 1.

(Production of Resin Molded Articles)

A resin composition molded article test piece 6-A was obtained in the same manner as in Example 1 except that the silicon-containing oxide-coated aluminum nitride particles 6-A were used instead of the silicon-containing oxide-coated aluminum nitride particles 1-A. In addition, a resin composition molded article test piece 6-B was obtained in the same manner as in Example 1 except that the silicon-containing oxide-coated aluminum nitride particles 6-B were used instead of the silicon-containing oxide-coated aluminum nitride particles 1-A.

The measurement and calculation results of the physical properties of the resin composition molded article test pieces 6-A and 6-B are shown in Table 1.

[Reference Example 1]

The ammonia concentrations measured under the above-described measurement conditions using the raw material aluminum nitride A and the raw material aluminum nitride B are shown in Table 2.

In addition, the measurement and calculation results of the physical properties of a resin composition molded article test piece obtained in the same manner as in Example 1 except that the raw material aluminum nitride A were used instead of the silicon-containing oxide-coated aluminum nitride particles 1-A and a resin composition molded article test piece obtained in the same manner as in Example 1 except that the raw material aluminum nitride B were used instead of the silicon-containing oxide-coated aluminum nitride particles 1-A are shown in Table 2.

[Table 1-1]

Table 1-1

| | Raw material aluminum nitride particle | | | | | | | | Crushed aluminum nitride particle | Untamped density decrease rate*2 [%] |
|---|---|---|---|---|---|---|---|---|---|---|
| | Kind | $D_1 10$ [μm] | $D_1 50$ [μm] | $D_1 90$ [μm] | Particle size distribution width | BET*1 [$m^2$/g] | 45 μm-opening sieve passing rate [mass%] | Untamped density [g/$cm^3$] | Untamped density [g/$cm^3$] | |
| Example 1 | A | 0.5 | 1.5 | 2.8 | 1.53 | 2.6 | 98.6 | 0.71 | 0.52 | 27 |
| | B | 0.8 | 3.2 | 7.8 | 2.19 | 2.3 | 80.0 | 0.57 | 0.46 | 19 |
| Example 2 | A | 0.5 | 1.5 | 2.8 | 1.53 | 2.6 | 98.6 | 0.71 | 0.52 | 27 |
| | B | 0.8 | 3.2 | 7.8 | 2.19 | 2.3 | 80.0 | 0.57 | 0.46 | 19 |
| Example 3 | A | 0.5 | 1.5 | 2.8 | 1.53 | 2.6 | 98.6 | 0.71 | 0.52 | 27 |
| | B | 0.8 | 3.2 | 7.8 | 2.19 | 2.3 | 80.0 | 0.57 | 0.46 | 19 |
| Comparative Example 1 | A | 0.5 | 1.5 | 2.8 | 1.53 | 2.6 | 98.6 | 0.71 | | |
| | B | 0.8 | 3.2 | 7.8 | 2.19 | 2.3 | 80.0 | 0.57 | | |
| Comparative Example 2 | A | 0.5 | 1.5 | 2.8 | 1.53 | 2.6 | 98.6 | 0.71 | | |
| | B | 0.8 | 3.2 | 7.8 | 2.19 | 2.3 | 80.0 | 0.57 | | |
| Comparative Example 3 | A | 0.5 | 1.5 | 2.8 | 1.53 | 2.6 | 98.6 | 0.71 | | |
| | B | 0.8 | 3.2 | 7.8 | 2.19 | 2.3 | 80.0 | 0.57 | | |

*1 represents the BET specific surface area.
*2 represents the decrease rate of the untamped density of the crushed aluminum nitride particle with respect to the untamped density of the raw material aluminum nitride particle.

[Table 1-2]

Table 1-2

| | Silicon-containing oxide-coated aluminum nitride particle | | | | | | | | | | | | Resin composition |
|---|---|---|---|---|---|---|---|---|---|---|---|---|---|
| | Kind | $D_2 10$ [μm] | $D_2 50$ [μm] | $D_2 90$ [μm] | Particle size distribution width | Particle size distribution width change rate [%] | BET*1 [$m^2$./g] | 45 μm-opening sieve passing rate [mass%] | 45 μm-opening sieve passing rate ratio | Untamped density [g/$cm^3$] | Ammonia concentration [mg/L] | ΔSi amount*2 [mass ppm] | Thermal conductivity [W/mK] |
| Example 1 | 1-A | 0.4 | 1.6 | 2.8 | 1.54 | -2.7 | 2.6 | 96.8 | 0.98 | 0.52 | 1 | 1171 | 2.3 |
| | 1-B | 0.9 | 2.9 | 6.2 | 1.85 | -15.3 | 2.3 | 85.0 | 1.06 | 0.46 | 1 | 1114 | 2.9 |
| Example 2 | 2-A | 0.6 | 1.8 | 3.0 | 1.35 | -14.7 | 2.8 | 95.5 | 0.97 | 0.54 | 1 | 1852 | 2.3 |
| | 2-B | 0.9 | 3.1 | 7.1 | 2.02 | -7.9 | 2.4 | 85.0 | 1.06 | 0.47 | 1 | 1641 | 2.8 |
| Example 3 | 3-A | 0.6 | 1.7 | 2.9 | 1.34 | -15.0 | 2.7 | 97.8 | 0.99 | 0.57 | 1 | 1224 | 2.4 |
| | 3-B | 1.3 | 2.8 | 5.0 | 1.30 | -40.7 | 2.3 | 93.0 | 1.16 | 0.52 | 1 | 1228 | 2.8 |
| Comparative Example 1 | 4-A | 0.5 | 1.5 | 2.6 | 1.64 | 3.8 | 2.7 | 85.5 | 0.87 | 0.78 | 1 | 1134 | 2.3 |
| | 4-B | 1.0 | 3.3 | 9.9 | 2.65 | 20.9 | 2.3 | 70.0 | 0.88 | 0.64 | 1 | 1227 | 2.9 |
| Comparative Example 2 | 5-A | 0.4 | 1.4 | 2.7 | 1.62 | 2.7 | 2.7 | 88.6 | 0.90 | 0.77 | 1 | 1087 | 2.3 |
| | 5-B | 0.9 | 3.2 | 9.4 | 2.63 | 20.1 | 2.3 | 74.0 | 0.93 | 0.59 | 1 | 1178 | 2.8 |
| Comparative Example 3 | 6-A | 0.5 | 1.3 | 2.5 | 1.53 | -3.2 | 2.7 | 95.9 | 0.97 | 0.54 | 585 | 1231 | 2.3 |
| | 6-B | 0.7 | 2.3 | 4.4 | 1.63 | -25.4 | 2.4 | 95.0 | 1.19 | 0.48 | 44668 | 1280 | 2.8 |

*1 represents the BET specific surface area.
*2 represents the silicon atom content in the silicon-containing oxide film of the silicon-containing oxide-coated aluminum nitride particle.

[Table 2]

Table 2

| | Ammonia concentration [mg/L] | Thermal conductivity [W/mK] |
|---|---|---|
| Raw material aluminum nitride A | 10000 or higher | 2.0 |
| Raw material aluminum nitride B | 10000 or higher | 2.8 |

In Examples 1 to 3, it is found that in the first step in the method for producing a silicon-containing oxide-coated aluminum nitride particle, aggregated particles that were included in the raw material aluminum nitride were crushed, so that the silicon-containing oxide-coated aluminum nitride particles having a decreased untamped density with aggregability suppressed could be obtained. In addition, it is also found that the silicon-containing oxide-coated aluminum nitride particles of Examples 1 to 3 had high thermal conductivity and excellent moisture resistance.

On the other hand, the silicon-containing oxide-coated aluminum nitride particles obtained in Comparative Examples 1 and 2 where the first step was not performed had a large untamped density and easily aggregated. In addition, the silicon-containing oxide-coated aluminum nitride particle obtained in Comparative Example 3 where the first step was not performed and the crushing treatment was performed after the third step had a high ammonia concentration measured under the above-described measurement conditions and low moisture resistance.

**Claims**

1. A method for producing a silicon-containing oxide-coated aluminum nitride particle comprising an aluminum nitride particle and a silicon-containing oxide film that covers a surface of the aluminum nitride particle, the method comprising:

   a first step of crushing an aggregated particle that is included in a raw material aluminum nitride particle to obtain a crushed aluminum nitride particle;
   a second step of covering a surface of the crushed aluminum nitride particle with an organic silicone compound comprising a structure represented by the following formula (1) to obtain an organic silicone compound-coated aluminum nitride particle; and
   a third step of heating the organic silicone compound-coated aluminum nitride particle at a heating temperature of 300°C or higher and lower than 1000°C,
   wherein a decrease rate of an untamped density of the crushed aluminum nitride particle with respect to an untamped density of the raw material aluminum nitride particle is 10% or more,

   [Chem. 1]

   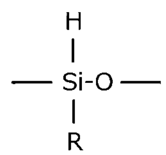

   · · · (1)

   wherein, in the formula (1), R is an alkyl group having 1 to 4 carbon atoms.

2. The method for producing a silicon-containing oxide-coated aluminum nitride particle according to Claim 1, wherein the heating temperature in the third step is 300°C or higher and 850°C or lower.

3. The method for producing a silicon-containing oxide-coated aluminum nitride particle according to Claim 1 or 2, wherein the silicon-containing oxide film is a silica film.

4. The method for producing a silicon-containing oxide-coated aluminum nitride particle according to Claim 1 or 2, wherein the second step is performed by a gas-phase adsorption method.

**5.** The method for producing a silicon-containing oxide-coated aluminum nitride particle according to Claim 4, wherein the second step is performed under a temperature condition of 30°C to 200°C.

**6.** The method for producing a silicon-containing oxide-coated aluminum nitride particle according to Claim 1 or 2, wherein the organic silicone compound comprising the structure represented by the formula (1) comprises at least one of a compound represented by the following formula (2) and a compound represented by the following formula (3),

[Chem. 2]

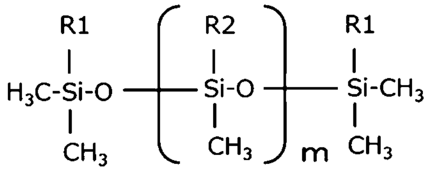

· · · (2)

wherein, in the formula (2), R1 and R2 are each independently a hydrogen atom or a methyl group, at least one of R1 and R2 is a hydrogen atom, and m is an integer of 0 to 10,

[Chem. 3]

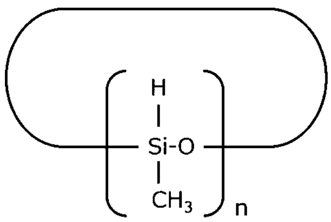

· · · (3)

wherein, in the formula (3), n is an integer of 3 to 6.

**7.** The method for producing a silicon-containing oxide-coated aluminum nitride particle according to Claim 1 or 2, wherein a particle size distribution width change rate of a particle size distribution width ($P_2$) of the silicon-containing oxide-coated aluminum nitride particle with respect to a particle size distribution width ($P_1$) of the raw material aluminum nitride particle that is calculated by the following formula (I) is 0% or less,

$$\text{particle size distribution width change rate (\%)} = [(P_2/P_1) - 1] \times 100 \qquad \text{(I)}$$

particle size distribution width ($P_1$) of raw material aluminum nitride particle = ($D_1$90 - $D_1$10)/$D_1$50 (I-1) (I-1)

particle size distribution width ($P_2$) of silicon-containing oxide-coated aluminum nitride particle = ($D_2$90 - $D_2$10)/$D_2$50 (I-2) (I-2)

wherein $D_1$90 is a cumulative volume 90% particle diameter of the raw material aluminum nitride particle, $D_1$50 is a cumulative volume 50% particle diameter of the raw material aluminum nitride particle, $D_1$10 is a cumulative volume 10% particle diameter of the raw material aluminum nitride particle, $D_2$90 is a cumulative volume 90% particle diameter of the silicon-containing oxide-coated aluminum nitride particle, $D_2$50 is a cumulative volume 50% particle diameter of the silicon-containing oxide-coated aluminum nitride particle, and $D_2$10 is a cumulative volume 10% particle diameter of the silicon-containing oxide-coated aluminum nitride particle.

**8.** A silicon-containing oxide-coated aluminum nitride particle comprising: an aluminum nitride particle; and a silicon-containing oxide film that covers a surface of the aluminum nitride particle,

wherein an untamped density is less than 0.58, and
an ammonia concentration measured under the following measurement conditions is less than 10 mg/L;
measurement conditions: a mixed solution obtained by adding and mixing 3 g of the silica-coated aluminum nitride particle to 17 g of a hydrochloric acid aqueous solution having a pH of 4 is heated at 134°C for two hours and

then left to stand at room temperature (25°C) for one hour to fabricate a measurement sample, and the ammonia concentration in the measurement sample at 25°C is measured using an ammonia electrode.

**9.** A resin composition comprising: the silicon-containing oxide-coated aluminum nitride particle according to Claim 8.

**INTERNATIONAL SEARCH REPORT**

International application No. **PCT/JP2024/024543**

**A. CLASSIFICATION OF SUBJECT MATTER**

***C01B 21/072***(2006.01)i; ***C08L 101/00***(2006.01)i
FI: C01B21/072 R; C08L101/00

According to International Patent Classification (IPC) or to both national classification and IPC

**B. FIELDS SEARCHED**

Minimum documentation searched (classification system followed by classification symbols)

C01B21/072; C08L101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2023-098163 A (RESONAC CORP.) 10 July 2023 (2023-07-10) entire text, all drawings | 1-9 |
| A | JP 2021-075435 A (SHOWA DENKO K.K.) 20 May 2021 (2021-05-20) entire text, all drawings | 1-9 |
| A | WO 2020/040309 A1 (SHOWA DENKO K.K.) 27 February 2020 (2020-02-27) entire text, all drawings | 1-9 |
| A | JP 2007-086550 A (FUJI XEROX CO., LTD.) 05 April 2007 (2007-04-05) entire text | 1-9 |
| A | JP 2019-034864 A (TOYO ALUMINIUM KK) 07 March 2019 (2019-03-07) entire text | 1-9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 August 2024** | **10 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/024543**

| Patent document cited in search report | Publication date (day/month/year) | Patent family member(s) | Publication date (day/month/year) |
|---|---|---|---|
| JP 2023-098163 A | 10 July 2023 | (Family: none) | |
| JP 2021-075435 A | 20 May 2021 | US 2022/0135805 A1<br>entire text, all drawings<br>WO 2021/095747 A1<br>EP 3911598 A1<br>CN 113474411 A | |
| WO 2020/040309 A1 | 27 February 2020 | US 2021/0309861 A1<br>entire text, all drawings<br>EP 3842383 A1<br>CN 112585087 A | |
| JP 2007-086550 A | 05 April 2007 | (Family: none) | |
| JP 2019-034864 A | 07 March 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020040309 A
- JP 2021075435 A